# EUROPÄISCHE PATENTANMELDUNG

(11) **EP 0 850 733 A1**
(43) Veröffentlichungstag der Anmeldung: **01.07.1998**
(21) Anmeldenummer: 97122473.8
(22) Anmeldetag: 19.12.1997
(51) Int. Cl.: B26D 7/00

(54) **Schneidemaschine mit einer Profilaufnahme für eine Schublade und/oder Schneidbrett**

(30) Priorität: 24.12.1996 DE 29622410 U
(71) Anmelder: Gebr. Graef GmbH & Co. KG, 59757 Arnsberg (DE)
(72) Erfinder: Bergmann, Christoph, 59846 Sundern (DE)
(74) Vertreter: Fritz, Herbert, Dipl.-Ing.

(57) **Zusammenfassung**

Schneidemaschine (10) mit einem Maschinengehäuse und einem entlang der Ebene eines Kreismessers (12) hin und her bewegbaren Schlitten (13), wobei unterhalb des Maschinengehäuses (11) wenigstens eine Profilaufnahme (16) für eine unterhalb der Schneidemaschine (10) herausziehbar angeordnete Schublade (17) und/oder ein Schneidbrett (19) vorgesehen ist. Die erfindungsgemäße Schneidemaschine (10) bietet die Möglichkeit, weitere Schneidutensilien, wie beispielsweise Handmesser oder dergleichen in räumlicher Nähe zur Schneidemaschine (10) selbst unterzubringen.

## Beschreibung

Die vorliegende Erfindung betrifft eine Schneidemaschine mit einem Maschinengehäuse und einem entlang der Ebene eines Kreismessers hin und her bewegbaren Schlitten. Derartige Schneidemaschinen werden in der Regel als sogenannte Haushaltsschneidemaschinen vorwiegend in Küchen zum Schneiden von Lebensmitteln jeglicher Art, also zum Beispiel Brot, Käse, Aufschnitt etc. eingesetzt. In Haushaltsküchen besteht generell das Bedürfnis, auf vergleichsweise engem Raum viele Gegenstände des Küchenbedarfs unterzubringen, wobei gleichzeitig möglichst viel Arbeitsraum verbleiben sollte. Außerdem ist es zweckmäßig, verschiedene Gegenstände, die bei der täglichen Küchenarbeit benötigt werden, in sinnvoller Ordnung möglichst räumlich nahe beieinander zu haben, um Suchvorgänge zu vermeiden. Bislang wird bei der Küchenarbeit einerseits eine Haushaltsschneidemaschine zum maschinellen Schneiden von Lebensmitteln verwendet, während zum Beispiel Gemüse, Speck oder dergleichen mit einem Handmesser kleingeschnitten wird. Üblicherweise werden diese Handmesser an einem anderen Ort, zum Beispiel in einer Schublade eines Küchenschranks aufbewahrt, die räumlich von dem Standort der Haushaltsschneidemaschine entfernt ist. Außerdem finden sich diese Handmesser häufig in einer Schublade zusammen mit anderen Küchengeräten untergebracht. Andererseits gibt es auch Vorrichtungen, um diese Handmesser zu lagern, zum Beispiel Messerständer oder an einer Wand aufhängbare Messeraufnahmen.

Ausgehend von diesem Stand der Technik ist es die Aufgabe der vorliegenden Erfindung, eine Schneidemaschine der eingangs genannten Art zu schaffen, die gleichzeitig die Möglichkeit bietet, weitere Schneidutensilien, zum Beispiel Handmesser oder dergleichen in räumlicher Nähe zur Schneidemaschine selbst unterzubringen.

Die Lösung dieser Aufgabe liefert eine Schneidemaschine der eingangs genannten Art mit den kennzeichnenden Merkmalen des Hauptanspruchs.

Erfindungsgemäß ist vorgesehen, daß wenigstens eine Profilaufahme vorhanden ist für eine unterhalb der Schneidemaschine herausziehbar angeordnete Schublade und/oder ein Schneidbrett.

Bei einer Variante der Erfindung ist vorgesehen, daß das Maschinengehäuse unmittelbar auf der Profilaufnahme ruht, in der sich eine Schublade herausziehbar befindet. Dabei ist natürlich die Profilaufnahme in ihrer Höhe so ausgebildet, daß sich ein ausreichender Raum für eine Schublade ergibt.

Gemäß einer weiteren Variante der Erfindung ist vorgesehen, unter der Schneidemaschine lediglich ein Schneidbrett vorzusehen, das dann aus der Profilaufnahme herausziehbar angeordnet ist.

Gemäß einer weiteren Variante der Erfindung ist vorgesehen, unterhalb der Schneidemaschine sowohl eine Profilaufnahme anzuordnen, die eine Schublade aufnimmt und außerdem noch zusätzlich Raum vorzusehen, in den man ein Schneidbrett einschieben kann. Man kann dies beispielsweise so lösen, daß man die Schublade in Längsrichtung und zwar parallel zur Bewegungsrichtung des Schlittens herausziehbar anordnet und das Schneidbrett über der Schubladenaufnahme in Querrichtung herausziehbar unterbringt. Bei dieser Variante der Erfindung mit Schubladenaufnahme und Schneidbrett ist vorzugsweise vorgesehen, daß das Maschinengehäuse auf dem horizontalen Schenkel eines etwa rechtwinklig gebogenen Bügels ruht. Hier unterscheidet sich die erfindungsgemäße Schneidemaschine von den herkömmlichen Schneidemaschinen, die meist unterhalb des Maschinengehäuses eine massive Platte aufweisen, auf der die Schneidemaschine steht. Durch die erfindungsgemäße Verwendung des etwa rechtwinklig gebogenen Bügels mit einem horizontalen Schenkel, auf dem das Maschinengehäuse steht und einem vertikalen Schenkel, erhält man unterhalb des etwa rechtwinklig gebogenen Bügels einen Freiraum. Dieser Freiraum wird erfindungsgemäß für eine Schubladenaufnahme genutzt, die eine herausziehbar angeordnete Schublade aufnimmt. Diese Schublade befindet sich folglich unterhalb des Maschinengehäuses und in körperlicher Verbindung zu diesem. In dieser Schublade, die quasi Teil der Schneidemaschine selbst ist, kann man verschiedene Gegenstände unterbringen, wobei bevorzugt die Unterbringung von Handmessern oder anderen Schneidutensilien vorgesehen ist. Dadurch wird der Vorteil erzielt, daß man bei Schneidvorgängen, die man teilweise maschinell mit der Schneidemaschine vornimmt und die teilweise von Hand erfolgen, alle zum Schneiden erforderlichen Utensilien in räumlicher Nähe zur Schneidemaschine vorfindet. Dies führt zu einer bequemen Handhabung und vermeidet Suchvorgänge und Unterbrechungen bei der Küchenarbeit. Die Unterbringung solcher Schneidwerkzeuge wie zum Beispiel Handmesser unterhalb des Maschinengehäuses der Schneidemaschine ist nicht nur sinnvoll und praktisch, sondern auch besonders platzsparend, verglichen beispielsweise mit der herkömmlichen Unterbringung in einer gesonderten Schublade eines Küchenschranks.

Vorzugsweise ist erfindungsgemäß vorgesehen, daß sich die Schubladenaufnahme in ihrem hinteren Endbereich bis zu dem vertikalen Schenkel des winklig gebogenen Bügels erstreckt. Dadurch schließt die Schubladenaufnahme, die sich unter dem Maschinengehäuse der Schneidemaschine befindet, in ihrem hinteren Endbereich mit dem Maschinengehäuse ab.

Weiterhin ist vorzugsweise vorgesehen, daß sich der horizontale Schenkel des winklig gebogenen Bügels, auf dem das Maschinengehäuse ruht, nur über einen Teil der Länge der Schubladenaufnahme erstreckt, so daß letztere in Längsrichtung unter dem Bügel und dem Maschinengehäuse herausragt. Dieser horizontale Schenkel des rechtwinklig gebogenen Bügels ist also in Längsrichtung kürzer als die Schubladenaufnahme, bietet dabei jedoch genügend Platz, um das Maschinengehäuse auf dem horizontalen Schenkel standsicher unterzubringen und zu befestigen.

Weiterhin ist vorzugsweise vorgesehen, daß die Breite der Schubladenaufnahme in etwa der Breite des Bügels entspricht, so daß an den Seiten die unter dem Bügel angeordnete Schubladenaufnahme mit diesem abschließt.

Vorzugsweise ist weiterhin vorgesehen, daß die Höhe der Schubladenaufnahme geringer ist als die lichte Höhe des horizontalen Schenkels des winklig gebogenen Bügels über der Standebene der Schneidemaschine. Dies führt dazu, daß zwischen der Oberseite der Schubladenaufnahme und der Unterseite des horizontalen Schenkels ein Zwischenraum gebildet ist. Durch diese bevorzugte Ausbildung der erfindungsgemäßen Schneidemaschine kann man den so entstandenen Zwischenraum noch einmal zusätzlich nutzen. Zum Beispiel kann man in den Zwischenraum ein Schneidbrett einschieben, das man bei Schneidvorgängen mit den Handmessern häufig benötigt.

Vorzugsweise weist dieses Schneidbrett solche Abmessungen auf, daß es in vollständig eingeschobenem Zustand an der Längsseite und / oder an der Querseite nicht über die horizontale obere Fläche der Oberseite der Schubladenaufnahme hinausragt. Das Schneidbrett liegt also an Längs und Querseiten bündig auf der Schubladenaufnahme und ist dort optisch unauffällig angeordnet.

Weiterhin ist gemäß einer bevorzugten Weiterbildung der Erfindung vorgesehen, daß das Schneidbrett wenigstens eine seitliche Aussparung Vorzugsweise in einem Eckbereich aufweist. Damit ist es möglich, unter dem horizontalen Schenkel des winklig gebogenen Bügels, auf dem sich das Maschinengehäuse der Schneidemaschine befindet, noch eine Stütze anzuordnen, um den winklig gebogenen Bügel zu stabilisieren. Diese Stütze stört dann beim Einschieben des Schneidbretts nicht, da die Aussparung Platz für diese Stütze bietet und sich das Schneidbrett dennoch einschieben läßt, so daß es bündig auf der Oberseite der Schubladenaufnahme liegt.

Bevorzugt ist eine Anordnung, bei der die Schublade in Längsrichtung aus der Schubladenaufnahme und parallel zur Bewegungsrichtung des Schlittens der Schneidemaschine herausziehbar ist. Diese Anordnung führt zu einer konstruktiv sinnvollen Gestaltung von Schneidemaschine, Maschinengehäuse und Schubladenaufnahme. Wenn man in der Schublade Handmesser unterbringen will, ist es vorzugsweise vorgesehen, im Innenraum der Schublade in Längsrichtung ausgerichtete schlitzartige Messeraufnahmen anzuordnen, in denen man die Schneidmesser gut lagern kann.

Gemäß einer Weiterbildung der Erfindung ist außerdem vorgesehen, daß die Schublade eine sogenannte Kindersicherung aufweist. Dies kann beispielsweise in Form von zwei jeweils seitlich angeordneten Drucktasten verwirklicht werden, die die Bedienungsperson eindrückt und dadurch die Schublade in der Schubladenaufnahme entriegelt. Weiterhin ist bei dieser Variante vorzugsweise vorgesehen, daß nach Entriegelung der Kindersicherung die Schublade beispielsweise über einen eingebauten Federmechanismus selbsttätig herausspringt. In diesem Fall ist es nicht notwendig, die Schublade an ihrer Stirnseite mit einem Griff zu versehen. Die Entriegelung der Kindersicherung muß vorzugsweise mit zwei Händen erfolgen, so daß beispielsweise in der Schubladenaufnahme angeordnete Messer sicher untergebracht sind. Alternativ zur Kindersicherung kann man auch die Schubladenaufnahme mit einem Schloß versehen und dadurch das unbefugte Herausziehen der Schublade verhindern.

Das Schneidbrett ist vorzugsweise quer zur Ausziehrichtung der Schublade beweglich. Damit bei Bewegungen der Schneidemaschine, z. B. wenn man diese an einen anderen Platz transportiert, das Schneidbrett an der Schneidemaschine festgelegt ist, ist vorzugsweise eine Rastsicherung für das Schneidbrett vorgesehen. Hierzu kann man beispielsweise einen Stift am Schneidbrett einsetzen, der gegebenenfalls federnd gelagert sein kann, und der in der eingeschobenen Position des Schneidbretts z. B. in ein entsprechendes Loch in der Schubladenblende einrastet.

Die Unteransprüche betreffen bevorzugte Weiterbildungen der erfindungsgemäßen Aufgabenlösung. Weitere Vorteile der Erfindung ergeben sich aus der nachfolgenden Detailbeschreibung.

Im folgenden wird die vorliegende Erfindung anhand eines Ausführungsbeispiels unter Bezugnahme auf die beiliegenden Zeichnungen näher beschrieben. Dabei zeigen
- Fig. 1: eine perspektivische Ansicht einer erfindungsgemäßen Schneidemaschine;
- Fig. 2: eine Detailansicht der Schubladenaufnahme die sich unter dem Maschinengehäuse befindet;
- Fig. 3: eine perspektivische Ansicht der Schublade, die das Schubladengehäuse aufnimmt;
- Fig. 4a: eine Draufsicht auf das Schneidbrett, das sich unter dem Maschinengehäuse und über der Schublade befindet;
- Fig. 4b: einen Schnitt durch das Schneidbrett gemäß Fig. 4a;
- Fig. 5: zeigt eine perspektivische Ansicht einer Schneidemaschine gemäß einer Variante der Erfindung;
- Fig. 6: zeigt eine Detailansicht einer Profilaufnahme für ein einzuschiebendes Schneidbrett.

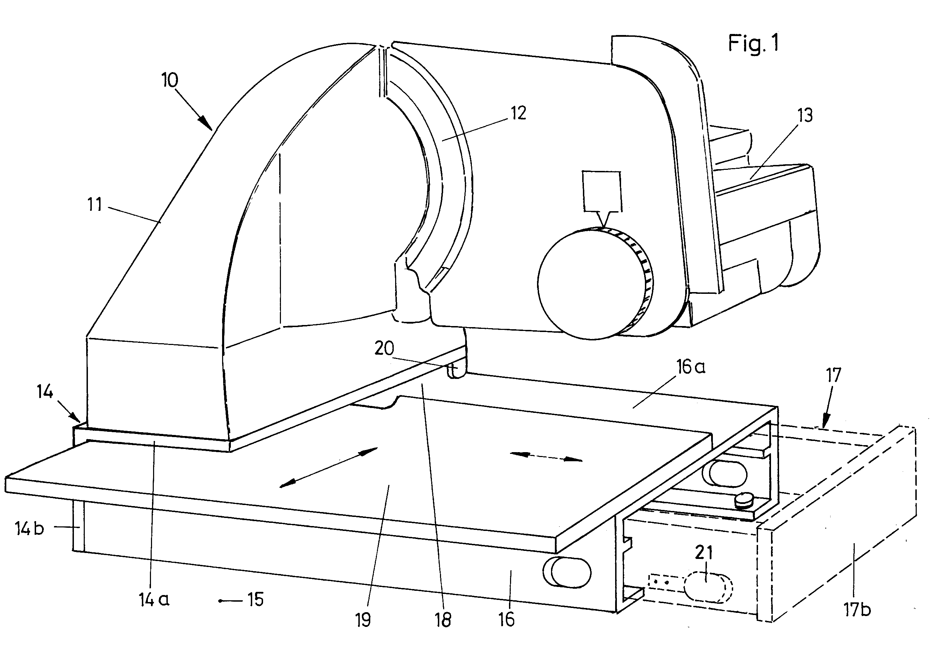

Zunächst wird auf Fig. 1 Bezug genommen.
Die Darstellung zeigt eine erfindungsgemäße Schneidemaschine 10 in perspektivischer Ansicht. Die Bauart des Maschinengehäuses der Schneidemaschine 10 ist im oberen Bereich des Maschinengehäuses 11 so wie prinzipiell auch bei einer herkömmlichen Schneidemaschine. Die Schneidemaschine 10 hat ein Kreismesser 12 und einen parallel zur Messerebene an diesem entlang hin und her bewegbaren Schlitten 13. Anders als bei einer herkömmlichen Schneidemaschine ruht aber das Maschinengehäuse 11 auf dem horizontalen Schenkel 14a eines rechtwinklig gebogenen Bügels 14, dessen vertikaler Schenkel 14b sich nach unten hin bis auf die Standebene 15 der Schneidemaschine 10 erstreckt. An diesem vertikalen Schenkel 14b des Winkelbügels 14 liegt der stirnseitige hintere Endbereich einer Schubladenaufnahme 16 an, die innenseitig als ein Führungsprofil zur Führung einer aus dieser Schubladenaufnahme 16 herausziehbaren Schublade 17 ausgebildet ist.

Dabei ist die obere horizontale Fläche 16a der Oberseite der Schubladenaufnahme 16 mit einem Abstand angeordnet zu der Unterseite des horizontalen Schenkels 14a des Winkelbügels 14. Durch diesen Abstand ist es möglich, in diesen Zwischenraum 18 ein auf der Oberseite 16a der Schubladenaufnahme aufliegendes Schneidbrett 19 so einzuschieben, daß dieses unter dem horizontalen Schenkel 14a des Winkelbügels 14 liegt. Wie man aus der Zeichnung Fig. 1 sieht kann das Schneidbrett 19 auch von der Seite her unter den horizontalen Schenkel 14a geschoben werden. Die Stärke des Schneidbretts 19 ist in etwa so, daß es den Zwischenraum 18 ausfüllt. Das Schneidbrett 19 kann herausgenommen werden und dient dann als Unterlage zum Schneiden von Nahrungsmitteln mit Hilfe von Handmessern. Nach dem Gebrauch kann das Schneidbrett 19 wieder platzsparend unter den Winkelbügel 14 der Schneidemaschine 10 geschoben werden und nimmt dann keinen zusätzlichen Raum in Anspruch.

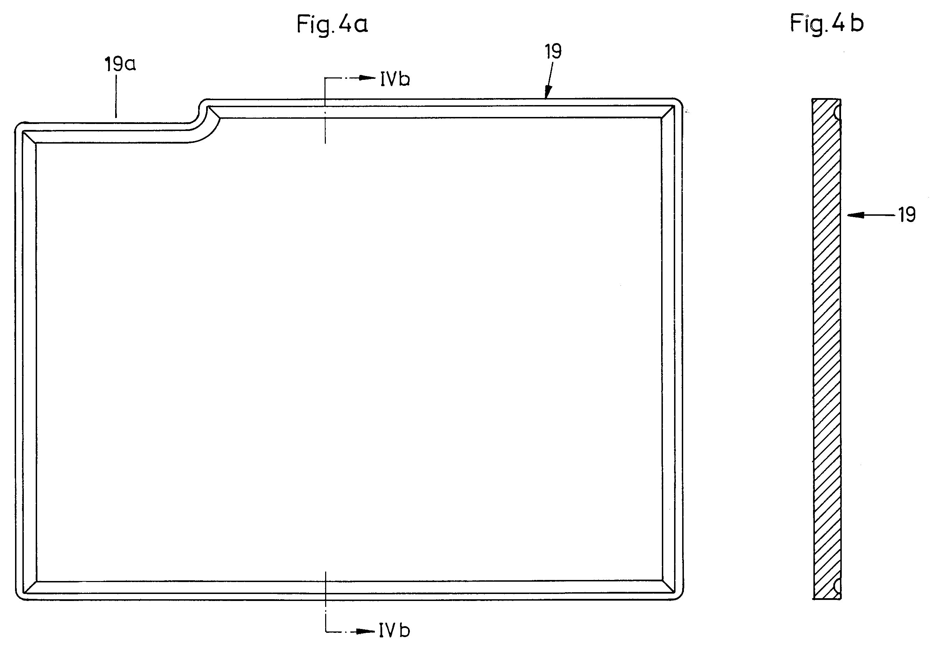

Das Schneidbrett 19 selbst ist im Detail noch einmal in den Figuren 4a und 4b dargestellt. Wie man sieht hat das Schneidbrett 19 eine seitliche Aussparung 19a in einem Eckbereich, der bei eingeschobenem Schneidbrett 19 unter dem innenliegenden hinteren Eckbereich des horizontalen Schenkels 14a des Winkelbügels 14 liegt, so daß dort Platz verbleibt für eine Stütze 20, die das Maschinengehäuse 11 abstützt (siehe Fig. 1). Aufgrund der Aussparung 19a ist es dann möglich, das Schneidbrett 19 so unter den Schenkel 14a des Winkelbügels 14 zu schieben, daß dieses trotz der Stütze 20, die sich an der innenliegenden Längsseite des Schneidbretts 19 befindet, an der außenliegenden Längsseite 19b des Schneidbretts, die in Fig. 1 sichtbar ist, bündig mit der darunterliegenden äußeren Längskante der Schubladenaufnahme 16 liegt.

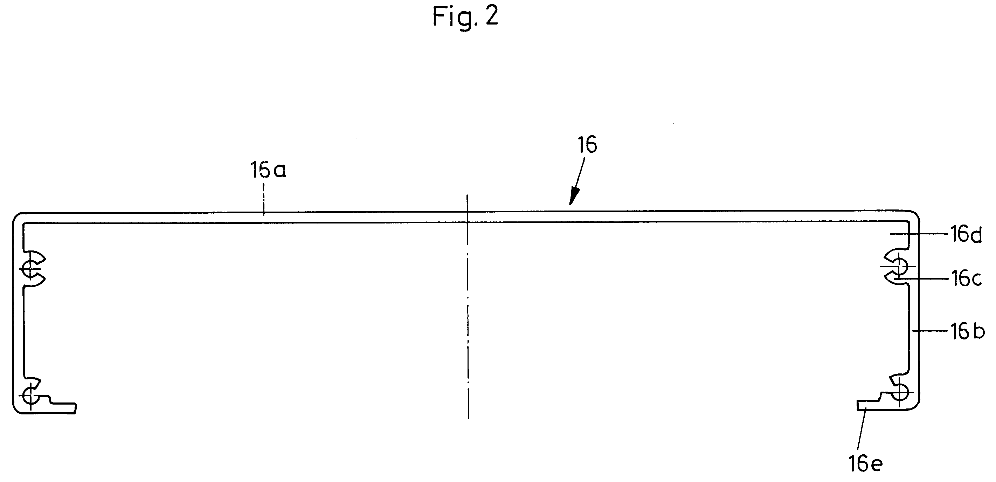

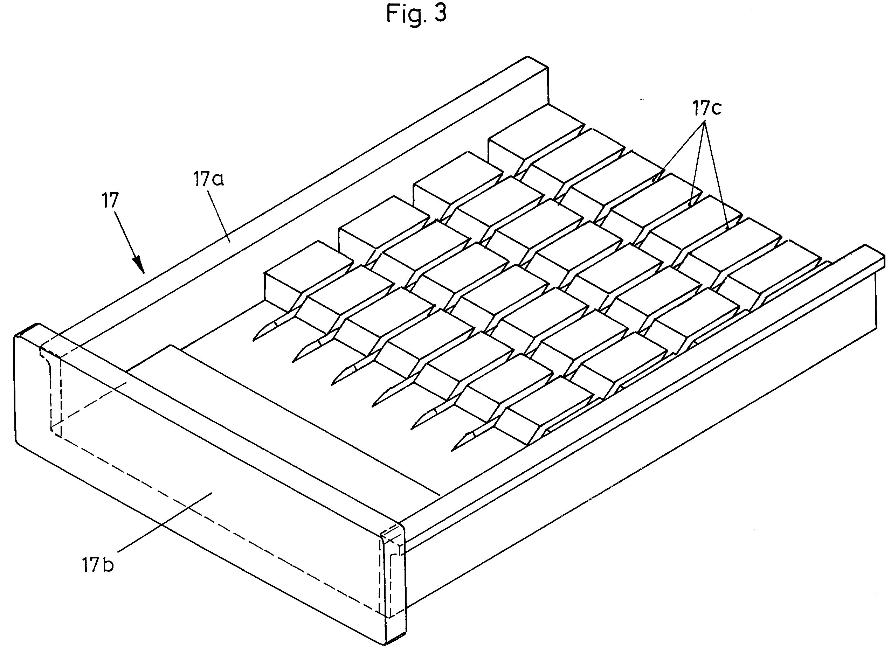

Hier nachfolgend wird nun auf die Figuren 2 und 3 Bezug genommen und anhand dieser die Schubladenaufnahme 16 und die Schublade 17 näher beschrieben. Fig. 2 zeigt die Schubladenaufnahme 16 in der Vorderansicht. Wie man sieht handelt es sich bei dieser Schubladenaufnahme 16 im Prinzip um ein C-förmiges liegend angeordnetes Profil, das so ausgebildet ist, daß es eine Führung für die herausziehbare Schublade 17 bietet. Dazu sind an dem Profil in den oberen Eckbereichen oberhalb der an den Seitenwänden 16b der Schubladenaufnahme 16 angeformten Stege 16c jeweils Führungsräume 16d gebildet, in die die seitlich nach außen ragenden Führungsstege 17a der Längsseitenwände der Schublade 17 eingreifen. Mit der Unterseite liegen diese Längsseitenwände der Schublade auf den nach innen weisenden horizontalen unteren Stegen 16e der Schubladenaufnahme 16 auf, so daß sich hier eine weitere Führung ergibt.

Wie sich weiterhin aus Fig. 3 entnehmen läßt, hat die Schublade 17 eine Stirnplatte 17b, die bei eingeschobener Schublade 17 bündig an der Stirnseite der Schubladenaufnahme 16 anliegt. Im inneren der Schublade 17 befinden sich schlitzartige Messeraufnahmen 17c, so daß man dort verschiedene Schneidmesser (nicht dargestellt) lagern kann. Die erfindungsgemäße Schneidemaschine 10 bietet somit den Vorteil, daß man den Stauraum unter dem Maschinengehäuse 11 der Schneidemaschine 10 optimal nutzt und außerdem Utensilien, die man zum Schneiden von Lebensmitteln benötigt wie z. B. Fleischmesser, Gemüsemesser etc. am gleichen Ort in unmittelbarer Nähe zur Schneidemaschine 10 selbst untergebracht sind. Man findet also alles was man in der Küche zum maschinellen Schneiden bzw. zum Schneiden der Lebensmittel von Hand benötigt systematisch an einem Ort untergebracht vor.

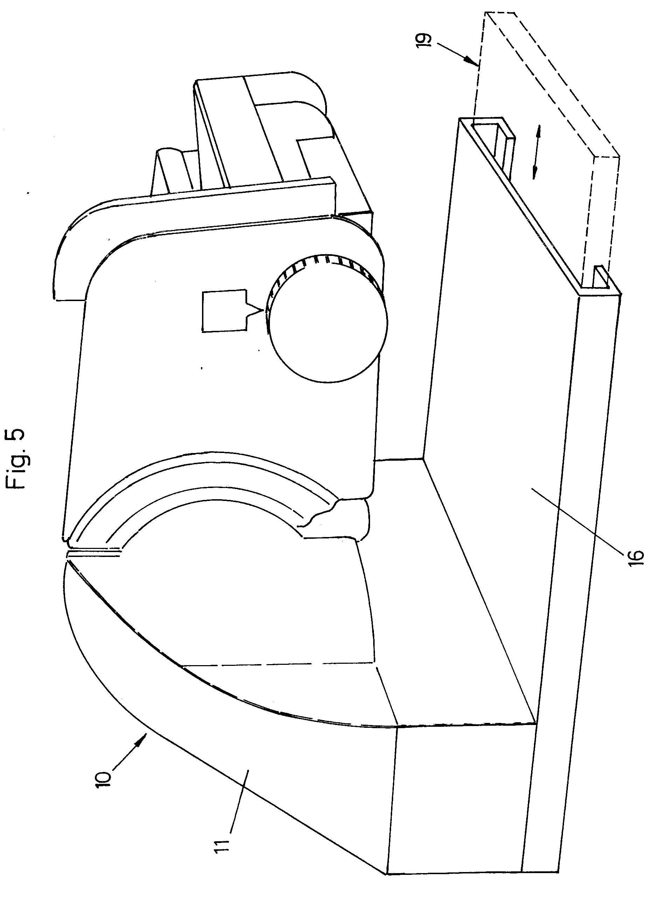

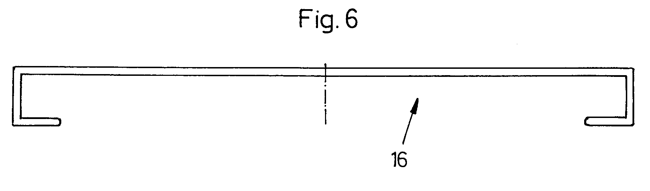

Nachfolgend wird auf die Fig. 5 und 6 Bezug genommen und anhand dieser eine Variante einer erfindungsgemäßen Schneidemaschine 10 beschrieben. Bei dieser Schneidemaschine 10 ruht anders als bei dem vorbeschriebenen Ausführungsbeispiel das Maschinengehäuse 11 der Schneidemaschine nicht auf dem horizontalen Schenkel des etwa rechtwinklig gebogenen Bügels sondern unmittelbar auf einer Profilaufnahme 16. Hier ist kein Freiraum zwischen der Profilaufnahme 16 und dem Maschinengehäuse 11 notwendig. Man kann nun in diese Profilaufnahme 16 direkt ein Schneidbrett einschieben, das in diesem Fall in Längsrichtung eingeschoben wird. Man kann bei dieser Variante der Erfindung aber auch die Profilaufnahme 16 etwas höher ausbilden und gegebenenfalls ein anderes Profil verwenden, so daß man bei dieser Schneidemaschine in die Profilaufnahme 16 anstelle eines Schneidbretts 19 auch eine Schublade 17 einschieben kann. In der Zeichnung Fig. 6 ist eine Profilaufnahme 16 für ein Schneidbrett 19 noch einmal für sich dargestellt.

Eine Kindersicherung, die das Herausziehen der Schublade 17 aus der Schubladenaufnahme 16 verhindert, ist in dem Ausführungsbeispiel gemäß Fig. 1 eingezeichnet. Hierbei sind seitlich außen an der Schublade 17 an beiden Seiten jeweils Drucktasten 21 angeordnet. Wenn diese Drucktasten 21 gleichzeitig einwärts gedrückt werden springt die Schublade 17 betätigt durch einen an dem vertikalen Schenkel 14b des Winkelbügels 14 in der Schubladenaufnahme 16 angeordneten Federmechanismus selbsttätig heraus. Aufgrund dieses Federmechanismus ist es nicht notwendig, die Stirnseite der Schublade (Schubladenblende 17b) mit einem Griff zu versehen und Kinder werden daran gehindert, die Schublade 17 zu öffnen und haben damit keinen Zugriff auf die in dieser Schublade befindlichen Messer.

## Patentansprüche

1. Schneidemaschine mit einem Maschinengehäuse und einem entlang der Ebene eines Kreismessers hin und her bewegbaren Schlitten, dadurch gekennzeichnet, daß unterhalb des Maschinengehäuses (11) wenigstens eine Profilaufnahme (16) für eine unterhalb der Schneidemaschine (10) herausziehbar angeordnete Schublade (17) und/oder ein Schneidbrett (19) vorgesehen ist.

2. Schneidemaschine nach Anspruch 1, dadurch gekennzeichnet, daß die Profilaufnahme (16) eine Schubladenaufnahme ist und daß das Maschinengehäuse (11) auf dem horizontalen Schenkel (14a) eines etwa rechtwinklig gebogenen Bügels (14) ruht und unterhalb des horizontalen Schenkels (14a) sich die Schubladenaufnahme (16) befindet.

3. Schneidemaschine nach Anspruch 1, dadurch gekennzeichnet, daß das Maschinengehäuse (11) unmittelbar auf der Profilaufnahme (16) ruht und diese Profilaufnahme (16) ein herausziehbar angeordnetes Schneidbrett (19) aufnimmt.

4. Schneidemaschine nach Anspruch 1, dadurch gekennzeichnet, daß die Profilaufnahme eine Schubladenaufnahme (16) ist für eine aus dieser herausziehbar angeordneten Schublade (17) wobei das Maschinengehäuse (11) unmittelbar auf der Schubladenaufnahme (16) ruht.

5. Schneidemaschine nach einem der Ansprüche 1 bis 4, dadurch gekennzeichnet, daß eine Kindersicherung vorgesehen ist, die ein unbefugtes Herausziehen der Schublade (17) aus der Schubladenaufnahme (16) z. B. durch Kinder verhindert.

6. Schneidemaschine nach einem der Ansprüche 1 bis 5, dadurch gekennzeichnet, daß die Kindersicherung 2 jeweils seitlich angeordnete Drucktasten (21) umfaßt, nach deren Entriegelung die vorzugsweise stirnseitig keinen Griff aufweisende Schublade (17) durch einen Federmechanismus oder dergleichen selbsttätig aus der Schubladenaufnahme (16) hervorspringt.

7. Schneidemaschine nach einem der Ansprüche 1 bis 6, dadurch gekennzeichnet, daß die Schublade (17) über ein Schloß verriegelbar.

8. Schneidemaschine nach einem der Ansprüche 1 bis 7, dadurch gekennzeichnet, daß sich die Schubladenaufnahme (16) in ihrem hinteren Endbereich bis zu dem vertikalen Schenkel (14b) des winklig gebogenen Bügels (14) erstreckt.

9. Schneidemaschine nach einem der Ansprüche 1 bis 8, dadurch gekennzeichnet, daß sich der horizontale Schenkel (14a) des winklig gebogenen Bügels (14), auf dem das Maschinengehäuse (11) ruht nur über einen Teil der Länge der Schubladenaufnahme (16) erstreckt, so daß letztere in Längsrichtung unter dem Bügel (14) und dem Maschinengehäuse (11) herausragt.

10. Schneidemaschine nach einem der Ansprüche 1 bis 9, dadurch gekennzeichnet, daß die Breite der Schubladenaufnahme (16) in etwa der Breite des Bügels (14) entspricht.

11. Schneidemaschine nach einem der Ansprüche 1 bis 10, dadurch gekennzeichnet, daß die Höhe der Schubladenaufnahme (16) geringer ist als die lichte Höhe des horizontalen Schenkels (14a) des winklig gebogenen Bügels (14) über der Standebene (15) der Schneidemaschine (10), so daß zwischen der Oberseite (16a) der Schubladenaufnahme (16) und der Unterseite des horizontalen Schenkels (14a) ein Zwischenraum (18) gebildet ist.

12. Schneidemaschine nach einem der Ansprüche 1 bis 11, dadurch gekennzeichnet, daß ein Schneidbrett (19) vorgesehen ist, das in den Zwischenraum (18) unter dem horizontalen Schenkel (14a) des winklig gebogenen Bügels (14) einschiebbar ist.

13. Schneidemaschine nach einem der Ansprüche 1 bis 12, dadurch gekennzeichnet, daß eine Verrastung für das vorzugsweise quer herausziehbare Schneidbrett (19) vorgesehen ist in Form eines Stifts oder dergleichen, der in ein Loch der Schubladenblende (17b) einrastet.

14. Schneidemaschine nach einem der Ansprüche 1 bis 13, dadurch gekennzeichnet, daß das Schneidbrett (19) solche Abmessungen aufweist, daß es in vollständig eingeschobenem Zustand an der Längs- und/oder Querseite nicht über die obere horizontale Fläche (16a) der Oberseite der Schubladenaufnahme (16) hinausragt.

15. Schneidemaschine nach einem der Ansprüche 1 bis 14, dadurch gekennzeichnet, daß das Schneidbrett (19) wenigstens eine seitliche Aussparung (19a) vorzugsweise in einem Eckbereich aufweist, so daß bei eingeschobenem Schneidbrett (19) diese Aussparung (19a) Platz bietet für eine Stütze (20) die sich unter dem horizontalen Schenkel (14a) des winklig gebogenen Bügels (14) befindet und das Maschinengehäuse (11) abstützt.

16. Schneidemaschne nach einem der Ansprüche 1 bis 15, dadurch gekennzeichnet, daß die Schublade (17) aus der Schubladenaufnahme (16) in Längsrichtung, d. h. parallel zur Bewegungsrichtung des Schlittens (13) der Schneidemaschine herausziehbar ist.

17. Schneidemaschine nach einem der Ansprüche 1 bis 16, dadurch gekennzeichnet, daß die Schublade (17) in ihrem Innenraum in Längsrichtung ausgerichtete schlitzartige Messeraufnahmen (17c) für Schneidmesser aufweist.
